# EUROPEAN PATENT APPLICATION

(11) **EP 4 807 964 A1**
(43) Date of publication of application: **16.09.2026**
(21) Application number: 25196847.5
(22) Date of filing: 19.08.2025
(51) Int. Cl.: H02M 3/00, H02M 3/335, H02M 3/158, H02M 1/00, H02M 1/40

(54) **ELEMENTARY CELLS FOR A VOLTAGE REGULATOR**

(30) Priority: 13.03.2025 EP 25163429; 09.07.2025 EP 25188593
(71) Applicant: Infineon Technologies Austria AG, 9500 Villach (AT)
(72) Inventor: IOB, Federico, 33100 Udine (IT); RIZZOLATTI, Roberto, 9523 Villach (AT); SAGGINI, Stefano, 33100 Udine (IT); URSINO, Mario, 9500 Villach (AT); DEBOY, Gerald Josef, 9061 Klagenfurt (AT)
(74) Representative: Infineon Patent Department

(57) **Abstract**

The disclosed concepts relate to elementary cells for a circular voltage regulator, a circular voltage regulator comprising a plurality of elementary cells, and methods of forming a circular voltage regulator using the elementary cells. Each elementary cell comprises one or more segments, each segment comprising a elementary cell input node configured for connection to a elementary cell output node of a segment, a elementary cell output node configured for connection to a elementary cell input node of a segment, a first half converter path comprising an input node coupled to the elementary cell input node, an output node, and a second winding coupled in series between the input node and the output node, and a second half converter path comprising an input node configured for connection to a respective phase input, an output node coupled to the elementary cell output node, and a first winding coupled in series between the input node and the output node. In some cases, each segment comprises one or more full converter paths, each full converter path comprising an input node configured for connection to a respective phase input, an output node, a first winding, and a second winding, wherein the first winding is coupled in series between the input node and the second winding, and the second winding is coupled in series between the first winding and the output node. The first half converter path, the second half converter path, and the one or more full converter paths are each configured to conduct current in a same direction between the respective input node and the respective output node. The second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

## Description

### TECHNICAL FIELD

The present disclosure generally relates to a voltage regulator, and more particularly elementary cells for a circular voltage regulator and methods for forming the circular voltage regulator.

### BACKGROUND

Voltage regulators that convert a 48V to a digital load voltage are typically based on a two-stage approach. A two-stage approach exploits the benefit of high step-down capability and high-power density of an unregulated Intermediate Bus Converter (IBC), while a second stage, which is typically designed with a buck converter, enables regulation at digital load level. To meet footprint requirements, high switching frequency operation is needed both in the first and second stages. However, high frequency operation leads to higher losses.

Moreover, various digital loads (e.g. microprocessors, accelerators, ASICs) have high current demands and strenuous transient requirements. In some cases, currents of up to 1000A at voltages of around 0.75V are required. At these levels, parasitic components may deteriorate dynamic performance of the regulator rapidly, while also impairing the power conversion efficiency due to distribution losses.

There is hence a need to provide a voltage regulator, particularly for powering modern processors, with high power density and good transient performance.

### SUMMARY

According to one aspect, there is provided an elementary cell for a circular voltage regulator.

The elementary cell comprises one or more segments. Each segment comprises a elementary cell input node configured for connection to a elementary cell output node of a segment; a elementary cell output node configured for connection to a elementary cell input node of a segment; a first half of a converter path comprising an input node coupled to the elementary cell input node, an output node, and a second winding coupled in series between the input node and the output node; one or more full converter paths, each full converter path comprising an input node configured for connection to a respective phase input, an output node, a first winding, and a second winding, wherein the first winding is coupled in series between the input node and the second winding, and the second winding is coupled in series between the first winding and the output node; and a second half of a converter path comprising an input node configured for connection to a respective phase input, an output node coupled to the elementary cell output node, and a first winding coupled in series between the input node and the output node. The first half converter path, the second half converter path, and the one or more full converter paths are each configured to conduct current in a same direction between the respective input node and the respective output node. The second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

According to a further aspect of the present disclosure, there is provided another elementary cell for a circular voltage regulator.

The elementary cell comprises at least one segment. Each segment comprises a elementary cell input node configured for connection to a elementary cell output node of a different segment; a elementary cell output node configured for connection to a elementary cell input node of a different segment; a first half converter path comprising an input node coupled to the elementary cell input node, an output node, and a second winding coupled in series between the input node and the output node; and a second half converter path comprising an input node configured for connection to a respective phase input, an output node coupled to the elementary cell output node, and a first winding coupled in series between the input node and the output node. The first half converter path and the second half converter path are each configured to conduct current in a same direction between the respective input node and the respective output node. The second winding of the first half converter path is inductively coupled to the first winding of the second half converter path of the same segment.

According to another aspect of the present disclosure, there is provided a circular voltage regulator.

The circular voltage regulator comprises a first elementary cell according to an embodiment disclosed herein, and a second elementary cell according to an embodiment disclosed herein. The elementary cell input node of a segment amongst the one or more segments of the first elementary cell is coupled to an elementary cell output node of a segment amongst the one or more segments of the second elementary cell.

According to an additional aspect of the present disclosure, there is provided a method for forming a circular voltage regulator.

The method comprises providing a first elementary cell according to an embodiment disclosed herein, providing a second elementary cell according to an embodiment disclosed herein, and connecting an elementary cell input node of a segment amongst the one or more segments of the first elementary cell to an elementary cell output node of a segment amongst the one or more segments of the second elementary cell.

Those skilled in the art will recognize additional features and advantages upon reading the following detailed description, and upon viewing the accompanying drawings.

### BRIEF DESCRIPTION OF THE DRAWINGS

Examples are explained below with reference to the drawings. The drawings serve to illustrate certain principles, so that only aspects necessary for understanding these principles are illustrated.
FIG. 1 presents a circuit diagram of a circular voltage regulator;
FIG. 2 presents a circuit diagram of a segment of an elementary cell for a circular voltage regulator;
FIG. 3 presents a circuit diagram of another segment of an elementary cell for a circular voltage regulator;
FIG. 4 is a block diagram of three elementary cells comprising varying numbers of segments;
FIG. 5 is a block diagram of an example circular voltage regulator, comprising four elementary cells including varying numbers of segments and their interconnections;
FIG. 6A and 6B are side views of elementary cells provided on a PCB with interconnections;
FIG. 7 is an isometric view of an example elementary cell including a segment;
FIG. 8 is an isometric view of an example elementary cell including two segments;
FIG. 9 is an isometric view of an example elementary cell including four segments;
FIG. 10 is an isometric view of an example circular voltage regulator comprising two elementary cells according to FIG. 9; and
FIG. 11 is a flow diagram of a method for forming a circular voltage regulator according to an exemplary embodiment.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to various elementary cells for forming a circular voltage regulator. It has been realized that a circular voltage regulator may be broken down into constituent elements. Such constituent elements may be combined to provide a circular voltage regulator with a desired number of converter paths (i.e., a desired number of phases). This flexibility allows an end user to form a circular voltage regulator with a desired electrical and operating characteristic, which may otherwise be unavailable as a standalone, monolithic structure.

Accordingly, the proposed elementary cells comprise at least one segment, with the segment providing a part of the circular voltage regulator. Such elements may be coupled (via their elementary cell input and elementary cell output nodes) to other segments within the same elementary cell, to segments of other elementary cells, or to itself (given the segment has at least two full converter paths when coupled to itself), in order to form a circular voltage regulator.

A circular voltage regulator including N power stages and N magnetic elements, with N being a number chosen by the end user, may be formed using the proposed elementary cells. The disclosed concepts take advantage of the inherently flexible nature of the circular voltage regulator, which allows for various implementations. By providing elemental cells including one or more segments, a modular approach to forming a circular voltage regulator may be realized. To be clear, this may particularly be valuable in down-solution scenarios, such as voltage regulator module applications, where the inductor and power stage are integrated into the end user's substrate.

To best understand the disclosure, it is useful to first appreciate the operation of a circular voltage regulator. A circular voltage regulator comprises a plurality of converter paths that are coupled in a circular manner. More specifically, each converter path comprises an input node, a first winding, a second winding, and an output node, coupled such that each first winding provided in series between the input node and the second winding of the same converter path, and the second winding is provided in series between the first winding and the output node of the same converter path. Each converter path is configured to conduct current in a same direction between the input node and the output node. In addition, each first winding of the converter paths is inductively coupled to a second winding of a different converter path. Each pair of inductively coupled windings thereby form a coupled inductor, also referred to as an elemental transformer. As each converter path conducts current in a same direction, a DC flux induced in the first winding of each converter path is cancelled/compensated by the current flowing through the second winding coupled to the respective first winding. Equally, a DC flux induced in the second winding of each converter path is cancelled/compensated by the current flowing through the first winding coupled to the respective second winding.

The cancellation of the DC flux between pairs of inductively coupled windings (i.e. between first windings and respective second windings) depends on a magnitude of the currents in these windings. As the coupled windings belong to separate converter paths, the respective currents depend on the duty cycle, the overlap of duty cycles and the corresponding phase shift between input phase voltages provided to input nodes of these neighbouring converter paths. In other words, phase shift and overlap of duty cycles provide an effective means of controlling the inductance of the power converter, and to control hence the dynamic response quality of the power converter. For example, by firing all phases simultaneously, the overlap of phases is maximized at a phase difference of zero. The cancellation effect is maximized, and the inductance of the power converter is minimal.

Hence, the power converter provides a magnetic structure that may exhibit improved transient response and power density when powering a high current load (e.g., a digital load).

In other words, a circular voltage regulator provides a plurality of coupled inductors, also referred to as elementary transformers (formed by coupling of two windings of different converter paths) coupled in series, with each coupled inductor/elementary transformer having windings exposed to current from two different converter paths (with each current having a different direction) thereby cancelling DC flux. As a result, a voltage regulator (i.e., a power converter) with good transient response and power density may be realized. In contrast to a trans-inductor voltage regulator (TLVR), the circular voltage regulator does not require a single TLVR path that can experience high resistive losses. Instead, DCR resistance is balanced across the circular voltage regulator. Further, as each elementary transformer does not experience a DC flux, a core of each elementary transformer may be smaller. The circular multi-phase magnetic structure of the voltage regulator therefore effectively couples all coupled input phases, similarly to a zero-bias TLVR, but without sharing a common winding among all the phases.

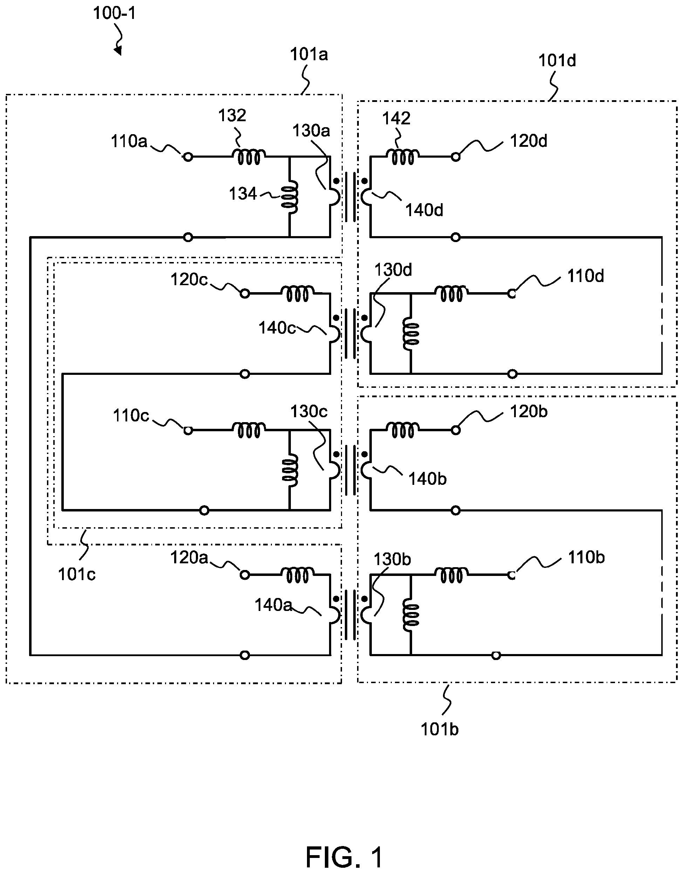

FIG. 1 presents a circuit diagram of such a circular voltage regulator 100-1.

As shown, the circular voltage regulator 100-1 comprises a plurality of converter paths 101a-d. Each converter path 101a-d comprises an input node 110a-d, an output node 120a-d, a first winding 130a-d, and a second winding 140a-d. The first winding 130a-d of each converter path 101a-d is coupled in series between the input node 110a-d and the second winding 140a-d of the respective converter path. The second winding 140a-d of each converter path 101a-d is coupled in series between the first winding 130a-d and the output node 120a-d of the respective converter path101a-d.

Each converter path 101a-d is configured to conduct current in a same direction between the input node 110a-d and the output node 120a-d. That is, all of the converter paths 101a-d conduct current from their respective input node 110a-d to their respective output node 120a-d, or all of the converter paths 101a-d conduct current from their respective output node 120a-d to their respective input node 110a-d.

Every first winding 130a-d is inductively coupled to a second winding 140a-d of a different converter path101a-d. That is, it is never the case that the first winding 130a-d of a converter path 101a-d is inductively coupled to the second winding 140a-d of the same converter path 101a-d. Thus, in the depicted embodiment, each first winding 130a-d of the converter paths 101a-d is inductively coupled to a second winding 140a-d of a different converter path 101a-d. Alternatively, in another embodiment, the first winding 130a-d of each converter path 101a-d may be inductively coupled to a first winding of a different converter path 130a-d, and the second winding 140a-d of each converter path 101a-d may be inductively coupled to a second winding of a different converter path 101a-d, given that the windings are wrapped around respective core(s) in different directions, thereby cancelling magnetic flux induced by current flowing through the windings. As a result, each pair of inductively coupled windings is coupled to each other pair of inductively coupled windings in a series loop (at least indirectly via another pair of inductively coupled windings).

For example, a first winding 130a of a first converter path 101a may be inductively coupled to a second winding 140b of a second converter path 101b thereby coupling the first converter path 101a to the second converter path 101b, a first winding 130b the second converter path 101b may be inductively coupled to a second winding 140c of a third converter path 101c thereby coupling the second converter path 101b to the third converter path 101c, a first winding 130c of the third converter path 101c may be inductively coupled to a second winding 140d of a fourth converter path 101d thereby coupling the third converter path 101c to the fourth converter path 101d, and a first winding 130d of the fourth converter path 101d may be inductively coupled to a second winding 140a of the first converter path 101a thereby coupling the fourth converter path 101d to the first converter path 101a.

Accordingly, in this example, each of the first to fourth converter paths 101a-d are coupled in a series loop by the inductive coupling of the windings. Of course, it is worth noting that there may be fewer converter paths (e.g., three converter paths), or more converter paths (e.g., five converter paths). In any case, the same principle applies with the first windings 130a-d inductively coupled to second windings 14a-d of a different converter path 101a-d, with each pair of inductively coupled windings being coupled in a closed chain loop.

To be clear, each pair of inductively coupled windings depicted in FIG. 1 is presented in the form of an elemental transformer equivalent circuit. That is, each first winding 130a-d is shown with a primary leakage inductance 132, each second winding 140a-d is shown with a second leakage inductance 142, and a magnetizing inductance 134 of each pair of windings is shown in parallel with each first winding 130a-d.

A magnetizing inductance 134 of each pair of inductively coupled windings may be significantly higher than a leakage inductance 132 of the respective first winding 130a and a leakage inductance 142 of the second winding 140d. For example, the magnetizing inductance 134 of each pair of inductively coupled windings may be at least ten times greater than each leakage inductance 132, 142. Nonetheless, other ratios between the magnetizing inductance and leakage inductance are possible.

Furthermore, the inductively coupled first winding 130a-d and second winding pairs 140a-d may include a same number of turns. In other words, each first winding 130a-d may be coupled to a second winding 140a-d having a same number of turns. Accordingly, a turns ratio may be close to unity. Indeed, this will also mean that, for each converter path 101a-d, the first winding 130a-d and the second winding 140a-d belonging to the same converter path 101a-d will have a same number of turns. This may ensure that each converter path 101a-d has a similar direct current resistance.

Nevertheless, it should be noted that the turns ratio may not be unity - for example when one of the converter paths 101a-d receives a different magnitude of current to the other converter paths 1-1a-d. That is, each of the windings may not have the same number of turns.

For instance, when one of the converter paths 101a receives a current of a smaller magnitude than the other converter paths 101b-d, then the first winding 130a and the second winding 140a of said converter path 101a may have a greater number of turns than the first windings 130b-d and the second windings 140b-d of the other converter paths 101b-d to ensure balanced operation of the circular voltage regulator.

By way of simplified example, (for a circular voltage regulator with four converter paths) given that three of the converter paths receive a 20A current and one of the converter paths receive a 10A current, the converter path receiving the 10A current may have a first winding and second winding with double the number of turns (e.g., 2 turns) compared to the first winding and second winding of the converter paths receiving the 20A currents. More generally, the number of turns of the first winding and second winding of each converter path multiplied by the current provided to the respective converter path will equal a constant, the constant being the same for each converter path.

Thus, for each least one of the converter paths 101a-d, the first winding 130a-d and second winding 140a-d of the converter path 101a-d may include a first number of turns. And, for at least one other converter path 101a-d, the first winding 130a-d and second winding 140a-d of the converter path 101a-d may include a second number of turns different to the first number of turns.

An advantage of the circular voltage regulator 100, is that the converter paths 101a-d may be similar and/or arranged in a circular manner. More specifically, each first winding 130a-d may be similar to each other first winding 130a-d, and each second winding 140a-d may be similar to each other second winding 140a-d. Furthermore, each of the converter paths 101a-d may have a similar length (e.g., the connections between the input node 110a-d, the first winding 130a-d, the second winding 140a-d, and the output node 120a-d of each converter path 101a-d may be a similar length). As a result, each of the converter paths 101a-d may have a substantially similar direct current resistance. This leads to improved balance of the converter, with a good transient response. Indeed, in contrast to the zero-bias TLVR described above, this may be the case no matter how many phases are provided.

Furthermore, as the current through the first winding 130a-d and the current through the paired second winding 140a-d in different directions, a DC magnetic flux may be cancelled. Thus, from the perspective of each pair of inductively coupled windings, no steady state DC flux is provided. This means that each pair of inductively coupled windings does not require a large core to accommodate such DC flux. Thus, a power density of the voltage regulator is improved.

The input node 110a-d of each of the converter paths 101a-d may be coupled to respective phase inputs. When there is a load jump (i.e. an increase in the current/power required by a load coupled to the output nodes), a duty cycle of the voltage provided by one or more of the phase inputs may be increased. As each of the converter paths 101a-d are linked, an increase in current provided in one phase input leads to an increase of output current of all converter paths 101a-d. To be clear, each of the output nodes 120a-d of the plurality of converter paths 101a-d may be coupled to a common output node for connection to a load.

To be clear, each phase input may have different input voltage magnitudes and frequencies.

As a result of the proposed circular voltage regulator structure, an AC magnetic flux through each pair of inductively coupled windings only depends on a frequency of the voltage provided by each phase input, and on the voltage required by the load coupled to the output nodes.

Moreover, the phase inputs provided to each of the input nodes 110a-d may be provided by respective switching networks. The switching networks 112a-d may be driven by a controller to provide an appropriate AC voltage to each input node. In other words, each of the input nodes 110a-d of the converter paths may be coupled to respective switching networks. Any switching network that can receive an input voltage, and provide an alternating output voltage may be employed. In further examples, one or more of the input nodes may be coupled to an injection circuit.

Each switching network 112a-d may be identical, or may be dissimilar, depending on the application. Therefore, to be clear, each switching network 112a-d may be coupled to a different input voltage, and may provide a phase input having different frequencies.

In one example. each switching network may comprise a high side switch coupled between a common input voltage and the input node of the respective converter path, and a low side switch coupled between the input node of the respective converter path and a reference voltage. The reference voltage of each switching network may be ground, or may be a positive or negative reference potential. The circular voltage regulator 100-3 may therefore be implemented with classic buck converters coupled to the respective input nodes 110a-d of each converter path. Each input node 110a-d may be coupled to a half-bridge between a DC input voltage and a reference potential (e.g., ground potential). This implementation may be particularly suited for when high current is needed for a low voltage load. This would enable zero-bias within each pair of inductively coupled windings during any load condition.

Turning back to the presently disclosed concepts, it has been realized that a converter path may be split, such that it may be coupled to another split converter path and thus increase the number of converter paths in the circular voltage regulator. Therefore, elementary cells are proposed which provide at least one segment that can be coupled to other segments, allowing connection of a chosen number of converter paths in a circular manner. This flexible modular approach allows the resultant circular voltage regulator to be best adapted to the particular application, without the need to manufacture a boundless number of different types of circular voltage regulator. That is, by providing elementary cells comprising segments that are building blocks of a circular voltage regulator, a circular voltage regulator with any number of converter paths (i.e., phases/power stages) may be formed.

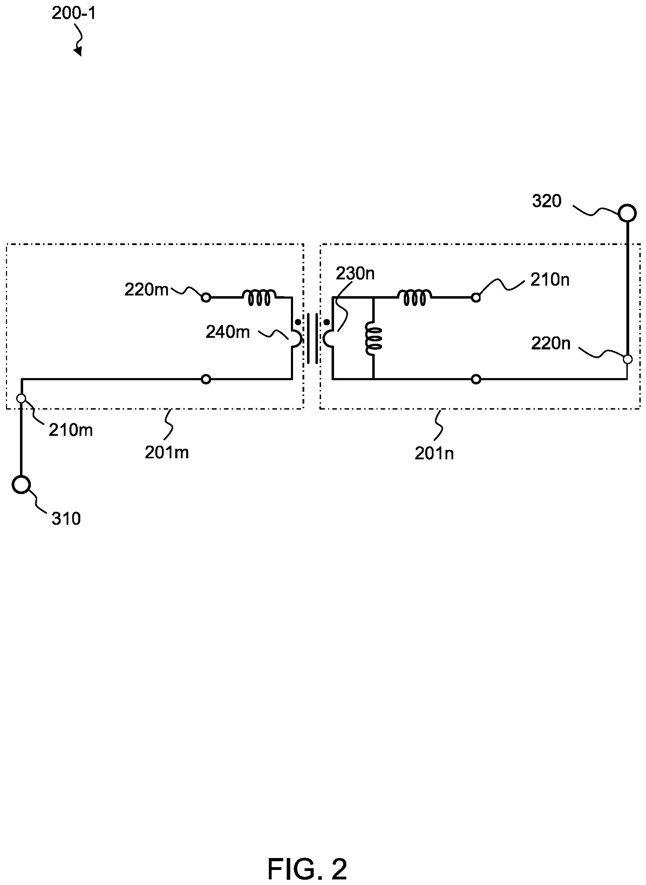

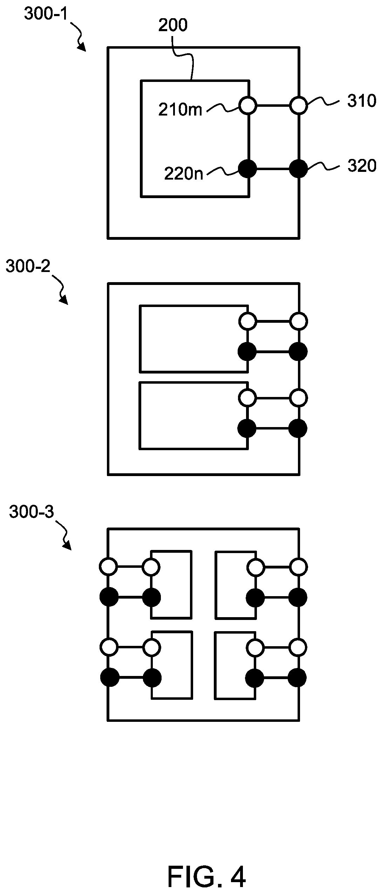

FIG. 2 presents a circuit diagram of an example elementary cell comprising one segment 200-1 for a circular voltage regulator according to an aspect of an embodiment. It should be noted that an elementary cell may comprise a plurality of segments as shown later with respect to FIG.4.

As shown, in this case the segment 200-1 comprises a first half converter path 201m and a second half converter path 201n. In other cases, additional full converter paths may be provided, as discussed further below.

The first half converter path 201m comprises an input node 210m, an output node 220m, and a second winding 240m coupled in series between the input node 210m and the output node 220m. The output node 220m may be coupled to a load. The input node 210m, in this case, is coupled to an elementary cell input node 310. That is, the input node 210m is coupled to an elementary cell input node 310, which in turn may be coupled to the elementary cell output node 320 of a different segment.

The second half converter path 201n comprises an input node 210n, an output node 220n, and a first winding 230n coupled in series between the input node 210n and the output node 220n. The input node 210n is configured for connection to a respective phase input. That is, the input node 210n may receive a phased input voltage, for example from a switching circuit. The output node 220n is coupled to an elementary cell output node 320, which in turn may be coupled to the elementary cell input node 310 of a different segment.

As with the circular voltage regulator described above, the first half converter path 201m and the second half converter path 201n are each configured to conduct current in a same direction between the respective input node 210n-m and the respective output node 220n-m. Accordingly, a current may flow through the second winding 240m of the first half converter path 201m and the first winding 230m of the second half converter path 201m in different directions. For example, in FIG. 2 the current in the second winding 240m may flow from bottom to top, whilst the current in the first winding 230n may flow from top to bottom.

The second winding 240m of the first half converter path 201m is inductively coupled to the first winding 230n of the second half converter path 201n. That is, both the first winding 230n and the second winding 240m may be provided through a same core, and thereby be inductively coupled. The first winding 230n and the second winding 240m may thereby form an elemental transformer. From another perspective, the first winding 230n and second winding 240m may form a pair of coupled inductors.

As stated above, an input node 210m of the first half converter path 201m is coupled to an elementary cell input node 310. The elementary cell input node 310 is configured for connection to an elementary cell output node 320 of a different segment. Similarly, the output node 220n of the second half converter path 201n is coupled to an elementary cell output node 320. The elementary cell output node 320 is configured for connection to an elementary cell input node 310 of a different segment. If coupled to different segments by these means in a series loop, a circular voltage regulator will be formed.

For example, if an elementary cell output node 320 of a first segment is coupled to an elementary cell input node 310 of a second segment, an elementary cell output node 320 of the second segment is coupled to an elementary cell input node 310 of a third segment, and an elementary cell output node 320 of the third segment is coupled to an elementary cell input node 310 of the first segment (with all segments being similar to that depicted in FIG.2), then a circular voltage regulator with three converter paths (i.e., three phases) may be formed. Equally, a different number of segments may be coupled. In addition, segments comprising multiple converter paths may also be coupled (as described below) in order to increase a number of converter paths of the circular voltage regulator.

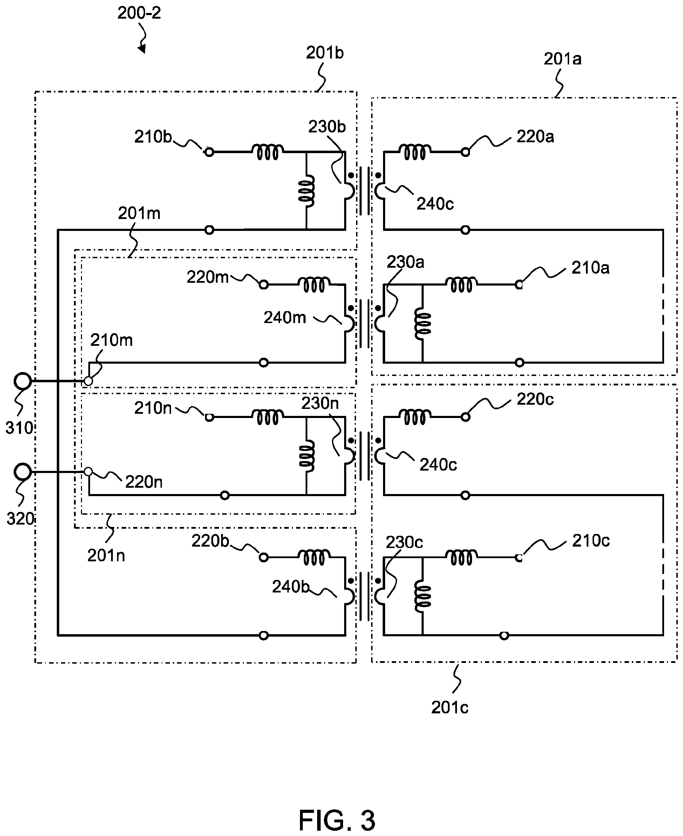

FIG. 3 presents a circuit diagram of another example segment 200-2 of an elementary cell for a circular voltage regulator according to an aspect of the disclosure. As shown, in this case the segment 200-2 comprises a first half converter path 201m, a second half converter path 201n, and three full converter paths 201a-c. Of course, fewer or additional full converter paths may be provided.

The first half converter path 201m comprises an input node 210m, an output node 220m, and a second winding 240m coupled in series between the input node 210m and the output node 220m. The output node 220m may be coupled to a load. The input node 210m, in this case, is coupled to an elementary cell input node 310. That is, the input node 210m is coupled to an elementary cell input node 310, which in turn may be coupled to the elementary cell output node 320 of a different segment.

The second half converter path 201n comprises an input node 210n, an output node 220n, and a first winding 230n coupled in series between the input node 210n and the output node 220n. The input node 210n is configured for connection to a respective phase input. That is, the input node 210n may receive a phased input voltage, for example from a switching network. The output node 220n is coupled to an elementary cell output node 320, which in turn may be coupled to the elementary cell input node 310 of a different segment.

The three full converter paths 201a-c each comprise an input node 210a-c, an output node 220a-c, a first winding 230a-c, and a second winding 240a-c. The first winding 230a-c is coupled in series between the input node 210a-c and the second winding 240a-c, and the second winding 240a-c is coupled in series between the first winding 230a-c and the output node 220a-c. Each input node 210a-c is configured for connection to a respective phase input. Thus, each input node 210a-c may be coupled to a switching network which provides a phased voltage.

The first half converter path 201m, the second half converter path 201n, and the three full converter paths 201a-c are each configured to conduct current in a same direction between the respective input node and the respective output node. If fewer or additional full converter paths were provided, each would also be configured to conduct current in the same direction between the respective input node and the respective output node of the converter path.

As shown, the second winding 240m of the first half converter path 201m is inductively coupled to a first winding 230a of a first full converter path 201a, a second winding 240a of the first full converter path 201a is inductively coupled to a first winding 230b of a second full converter path 201b, a second winding 240b of the second full converter path 201b is inductively coupled to a first winding 230c of a third full converter path 201c, and a second winding 240c of the third full converter path 201c is inductively coupled to the first winding 230n of the second half converter path 201n.

More generally, the second winding 240m of the first half converter path 201m is inductively coupled to a first winding 230a-c of one of the full converter paths 201a-c, the first winding 230n of the second half converter path 201n is inductively coupled to a second winding 240a-c of one of the full converter paths 201a-c, and each remaining first winding 230a-c of the full converter paths 201a-c is inductively coupled to a remaining second winding 240a-c of a different converter path 201a-c.

Accordingly, a segment comprising a string of converter paths bookended by the first half converter path 201m and the second half converter paths 201n is provided. The first half converter path 201m is coupled to an elementary cell node, and the second half converter path 201n is coupled to an elementary cell output node 320.

As a result, the segment 200-2 may interface with other segments (of the same elementary cell, or of a different elementary cell) in order to form a circular voltage regulator with at least five converter paths. Of course, many segments may be coupled to provide any number of coupled converter paths. In other embodiments, the elementary cell input node 310 and the elementary cell output node 320 may be coupled to each other to form a circular voltage regulator with four converter paths.

FIG. 4 is a block diagram of three elementary cells (300-1 - 300-3) comprising varying numbers of segments. These block diagrams are intended to demonstrate that the elementary cells may comprise any number of segments. The actual segments are not shown here for sake of clarity of the figure.

The first example elementary cell 300-1 comprises only a single segment 200 comprising an elementary cell output node 320 coupled to an output node 220n of a second half converter path, and an elementary cell input node 310 coupled to an input node 210m of a first half converter path. The segment 200 may comprise any number of full converter paths (like the segment described in relation to FIG. 3), or may equally not comprise any full converter paths (like the segment described in relation to FIG. 2).

The second example elementary cell 300-2 comprises two segments 200. Each segment comprises an elementary cell output node 320 coupled to an output node 220n of a second half converter path of the respective segment, and an elementary cell input node 310 coupled to an input node 210m of a first half converter path of the respective segment. The segments may be similar (i.e., have a same number of full converter paths, or may have similar geometries), or may be different (i.e., have a different number of full converter paths, or may have different geometries).

The third example elementary cell 300-3 comprises four segments 200. As before, each segment comprises an elementary cell output node 320 coupled to an output node 220n of a second half converter path of the respective segment, and an elementary cell input node 310 coupled to an input node 210m of a first half converter path of the respective segment. The segments may be similar (i.e., have a same number of full converter paths, or may have similar geometries), or may be different (i.e., have a different number of full converter paths, or may have different geometries).

Of course, it should be noted that the relative locations of the elementary cell input nodes 310 and elementary cell output nodes 320 may vary from the depicted block diagrams. In addition, it is worth reiterating that different numbers of segments may be provided by an elementary cell, such as three, or five or more.

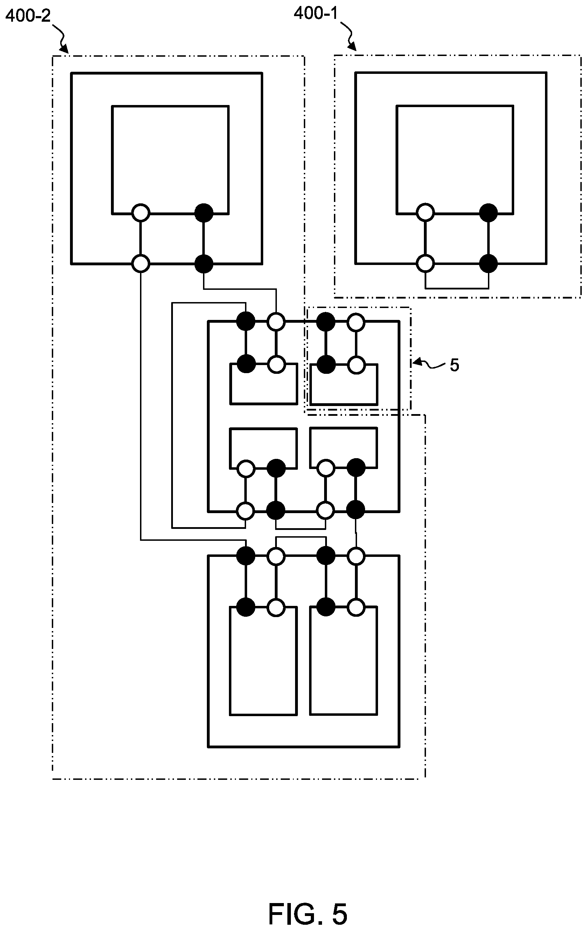

FIG. 5 is a block diagram of two example circular voltage regulators, formed using four elementary cells including varying numbers of segments and their interconnections. Specifically, block diagrams of four elementary cells are depicted.

As shown, elementary cell input nodes are coupled to elementary cell output nodes in order to create circular voltage regulators.

A first circular voltage regulator 400-1 is formed by connecting an elementary cell input node to an elementary cell output node of a same segment (assuming the segment has at least one full converter path).

A second circular voltage regulator 400-2 comprising six segments across three elementary cells is also depicted, with elementary cell input nodes coupled to elementary cell output nodes of different segments (the segments either being provided by the same elementary cell, or by different elementary cells).

In addition, it is depicted that one segment 5 of one elementary cell is not coupled at all.

This highlights the flexibility of the proposed system. It allows interconnection of elementary cells to form/generate circular voltage regulators of any desired size, and in any desired format and/or form factor.

Furthermore, in some cases, it may be beneficial to connect a compensation inductor between elementary cell input nodes and elementary cell output nodes. The connection of additional inductors between the nodes may help to reduce steady-state ripple of the formed circular voltage regulator. By adding an external inductor (with a relatively small inductance) between each elementary cell input node and output node, the equivalent steady state inductance of the regulator may be increased without significantly impacting overall current density.

For example, the compensation inductor may be coupled between the elementary cell input node of a selected segment amongst the one or more segments, and the elementary cell output node of a different segment amongst the one or more segments. Alternatively, the compensation inductor may be coupled between the elementary cell input node of a selected segment amongst the one or more segments, and the elementary cell output node of the selected segment. Further, the compensation inductor may be coupled between the elementary cell input node of a selected segment amongst the one or more segments, and an elementary cell output node of a segment of a further elementary cell.

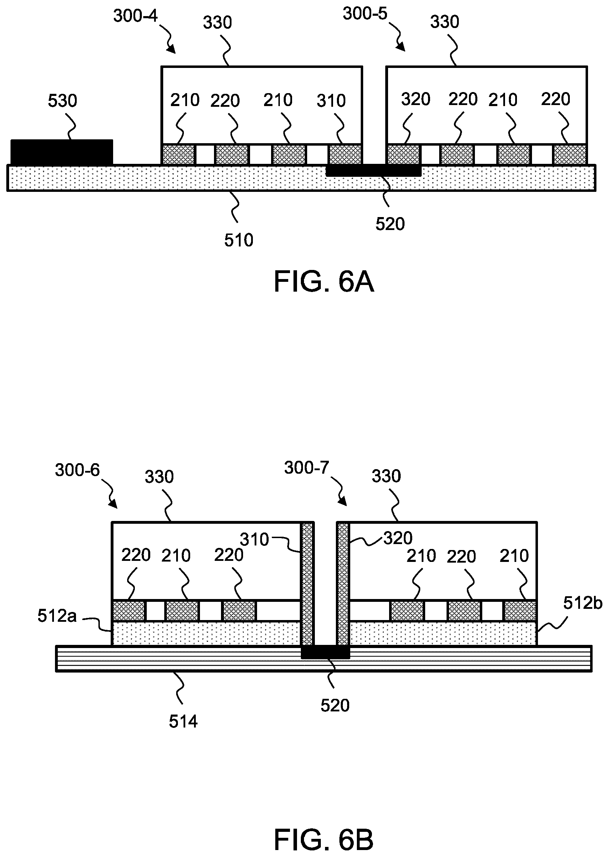

FIG. 6A and 6B are side views of elementary cells 300 provided on a substrate (e.g., a PCB) with interconnections. The segments are not shown here for sake of clarity, but the elementary cell input nodes 310 and output nodes 320, and the input nodes 210 and output nodes 220 of some of the converter paths are shown, to depict the example.

As shown, each elementary cell 300 may further comprise a housing 330 for the one or more segments. The housing 330 may have a regular form factor independent of specific configuration of the segment(s) of the elementary cell, in order to improve ease of installation/use.

FIG. 6A depicts a down solution modular approach for the elementary cell. In this case, the elementary cells 300-1, 300-2 are provided on a single substrate 510. In addition, the elementary cell input node 310of each segment and the elementary cell output node 320 of each segment is provided on a bottom surface of the housing 330, and the input nodes 210 of each converter path and the output nodes 220 of each converter path are provided on the bottom of the housing 330. Of course, embodiments are not restricted hereto, and the various nodes may be provided alternatively on a top surface or a side surface of the housing, or a combination thereof - the only difference will lie in the routing of the nodes to different components.

A connection 520 at the substrate level between the output node 320 of a segment of a first elementary cell, and the input node 310 of another segment of a second elementary cell is depicted. This connection 520 may be implemented in straightforward manner as a trace on a PCB. Furthermore, FIG. 6A also depicts a switching network module 530. The switching network module 530 may have pins for connection to the input nodes of each converter path 210 and the input node 210n of the second half converter path. Although not depicted for sake of clarity, these connections may also be implemented at the level of the substrate 510.

FIG. 6B depicts a case in which a local substrate 512a-b for each elementary cell 300-1, 300-2 is provided, alongside a regional substrate 514. In this case, the elementary cell input node 310 and the elementary cell output node 320 of each of the one or more segments of the elementary cells are coupled to the regional substrate 514 for interconnection with each other via connector 520. The input node 210 of each converter path and the output node 220 of each converter path of each of the one or more segments are coupled to the local substrate 512-b for connection to switching networks (not depicted), loads, compensation inductors, or other suitable components.

The elementary cell input node 310 of each segment and the elementary cell output node 320 of each segment are provided on a side surface of the housing, and the input and output nodes of the converter paths are provided on the bottom surface of the housing. Of course, embodiments are not restricted hereto, and the various nodes may be provided alternatively on a top surface, bottom surface, or a side surface of the housing, or a combination thereof - the only difference will lie in the routing of the nodes to different components.

The approach of FIG. 6B allows for simple connection by the end user. Indeed, only routing between elementary cells will need to be performed, with connection to switching networks, etc., handled locally. Nevertheless, it will be noted that different connection forms, locations and schemes may be implemented depending on the end application.

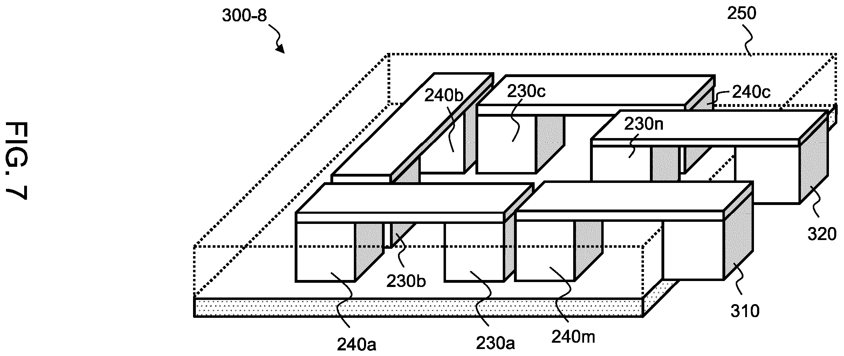

FIG. 7 is an isometric view of an example elementary cell 300-8 including a segment. More specifically, the segment comprises three full converter paths, a first half converter path, and a second half converter path. Thus, the circuit diagram of FIG. 3 and the segment depicted in FIG. 7 may be considered equivalent.

As shown, first windings 230a-n and second windings 240a-m of converter paths are inductively coupled to each other, thereby forming a segment bookended by first and second half converter paths. Each of the first and second windings of the segment are depicted as being surrounded by a same monolithic core 250 to aid coupling of the first winding and second winding. However, it will be appreciated that individual cores may be provided for each first winding-second winding pair.

The elementary cell input node 310 and elementary cell output node 320 are provided out of the monolithic core 250 to enable connection to other nodes. To be clear, the dotted box indicates the monolithic core 250 that the first and second windings extend through in order to couple to the adjacent winding. Output nodes and input nodes of the converter paths are not shown, but may be considered the bottom surfaces of the various windings. Such bottom surfaces may be coupled to switching networks, or a common node for connection to a load, as appropriate.

This 1-port (i.e., one segment, or one elementary cell input node/elementary cell output node) implementation of the elementary cell 300-8 may be coupled to other elementary cells to form the circular voltage regulator. In other embodiments, the elementary cell input node 310 and elementary cell output node 320 may be coupled together to form a four stage/phase circular voltage regulator.

That is, the elementary cell input node 310 and elementary cell output node 320 may be electrically coupled to a trace of a PCB and used to connect other modules. Additionally, a compensation inductor may be coupled between the elementary cell input node 310 and coupled elementary cell output node of another segment, and/or between the elementary cell output node 320 and coupled elementary cell input node of other segments to add a compensation inductor. The depicted implementation may be particularly suitable for very low profile (2mm or lower) vertical power delivery solutions.

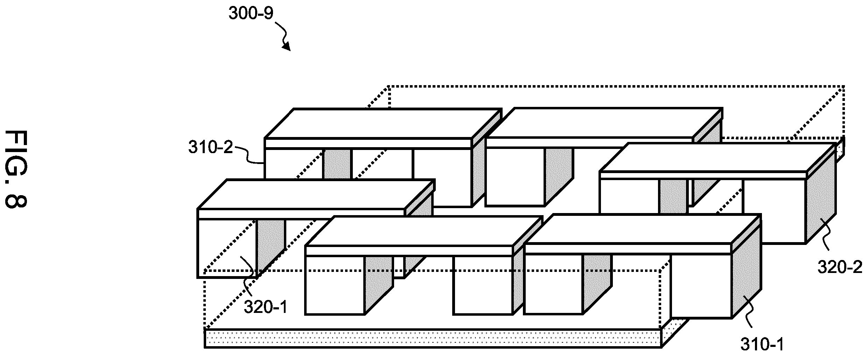

FIG. 8 is an isometric view of an example elementary cell 300-9 including two segments. More specifically, each segment comprises a single full converter path, a first half converter path, and a second half converter path.

As shown, for each segment, first and second windings of converter paths are inductively coupled to each other, thereby forming a segment bookended by first and second half converter paths. The elementary cell input node 310-1, 310-2, and elementary cell output node 320-1, 320-2 of each segment are provided out of the monolithic core. The elementary cell input node 310-1 of one segment may be coupled to the elementary cell output node 320-2 of the other segment, essentially providing a one port/segment elementary cell comprising a segment with three full converter paths (like FIG. 7).

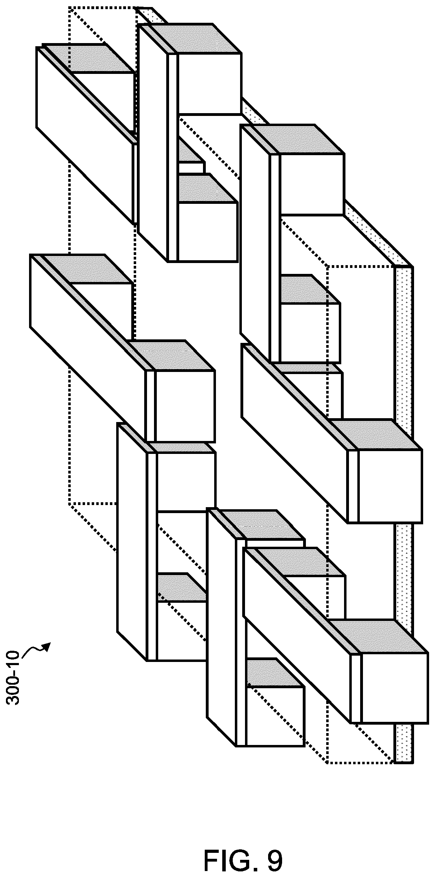

FIG. 9 is an isometric view of an example elementary cell 300-10 including four segments. More specifically, each segment comprises only one first half converter path and one second half converter path. Accordingly, four segments are provided, each of which may be represented by the circuit diagram of FIG. 2.

As shown, for each segment, the second winding of the first half converter path, and the first winding of the second half converter path are inductively coupled to each other, thereby forming a coupled inductor, or an elemental transformer from another perspective. As before, each elementary cell input node and elementary cell output node may be coupled to an elementary cell output node and an elementary cell input node, respectively, of different segments, thereby forming a circular voltage regulator.

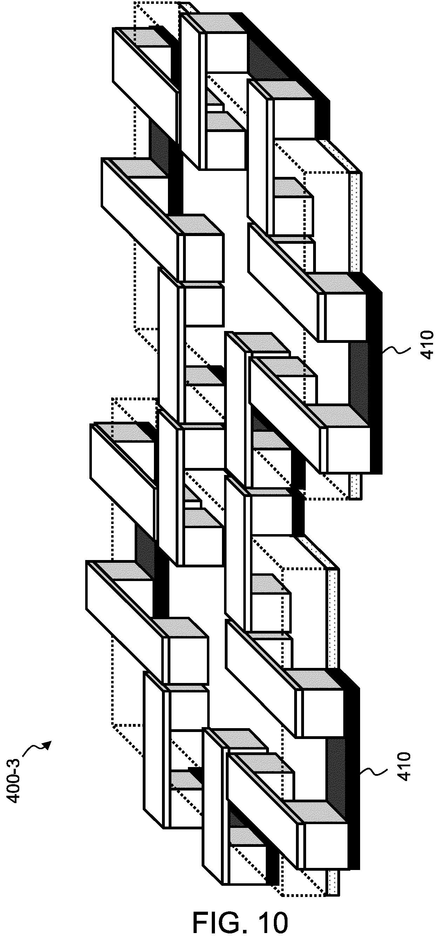

One example of this is shown in FIG. 10, which depicts an isometric view of an example circular voltage regulator 400-3 comprising two elementary cells coupled to form a circular voltage regulator.

In the case of one segment of the first elementary cell, the input node is coupled to the output node of one segment of the second elementary cell. For one segment of the second elementary cell, the input node is coupled to the output node of one segment of the first elementary cell. For all other cases, the output node of each segment is coupled to the input node of an adjacent segment of the elementary cell. The connection 410 may be made with any conductive material. In typical embodiments, the connections 410 may be made via traces of a PCB.

Although not depicted, each connection could also comprise an additional inductor for tuning the leakage inductance of the circular voltage regulator (thus providing improved/reduced steady state ripple).

Overall, this forms a circular voltage regulator having eight converter paths (i.e., eight phases). Of course, additional elementary cells may be provided should additional converter paths be desired. In addition, should fewer converter paths be desired, it is possible to simply disconnect segments.

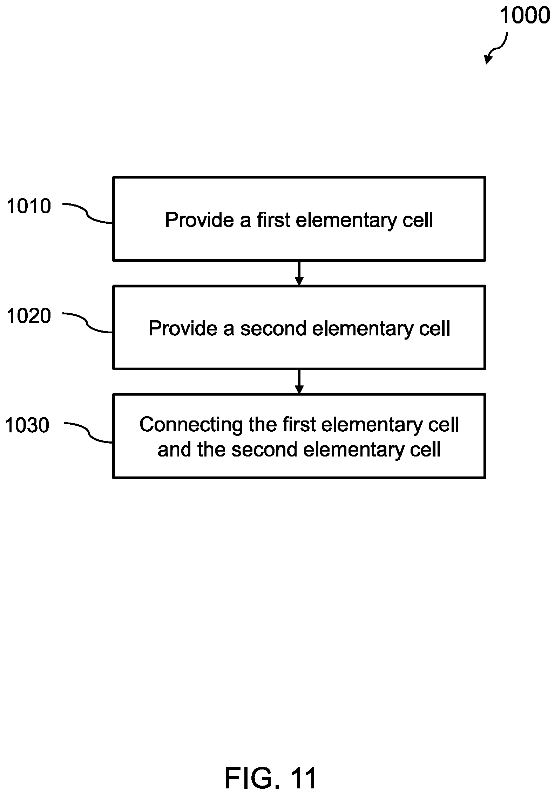

FIG. 11 presents a flow diagram of a method 1000 for forming a circular voltage regulator.

In step 1010, a first elementary cell as disclosed herein is provided. The elementary cell comprises one or more segments, and each segment may comprise only first and second half converter paths, or may comprise additional full converter paths. Each segment may differ. The first elementary cell may be provided on a PCB, for example.

In step 1020, a second elementary cell as disclosed herein is also provided. The second elementary cell may be similar to the first elementary cell, or may be different. The second elementary cell may be provided on a PCB, for example. This may be the same PCB or a different PCB to the one that the first elementary cell is provided on.

In step 1030, an elementary cell input node of a segment amongst the one or more segments of the first elementary cell is coupled to an elementary cell output node of a segment amongst the one or more segments of the second elementary cell. This may comprise providing a trace on a PCB electrically connecting the two nodes.

Step 1030 may be performed iteratively until segments are coupled in a closed chain loop. At this point, a circular voltage regulator will be formed, having a plurality of converter paths that conduct current in a same direction, and inductively coupled to adjacent converter paths via inductively coupled first and second windings.

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. An elementary cell for a circular voltage regulator, the elementary cell comprising one or more segments, each segment comprising:
   an elementary cell input node configured for connection to an elementary cell output node of a different segment;
   an elementary cell output node configured for connection to an elementary cell input node of a different segment;
   a first half converter path comprising an input node coupled to the elementary cell input node, an output node, and a second winding coupled in series between the input node and the output node; and
   a second half converter path comprising an input node configured for connection to a respective phase input, an output node coupled to the elementary cell output node, and a first winding coupled in series between the input node and the output node,
   wherein the first half converter path and the second half converter path are each configured to conduct current in a same direction between the respective input node and the respective output node, and wherein the second winding of the first half converter path is inductively coupled to the first winding of the second half converter path of the same segment.
2. The elementary cell of embodiment 1, further comprising one or more further segments, each further segment comprising:
   an elementary cell input node configured for connection to an elementary cell output node of a segment;
   an elementary cell output node configured for connection to an elementary cell input node of a segment;
   a first half converter path comprising an input node coupled to the elementary cell input node, an output node, and a second winding coupled in series between the input node and the output node;
   one or more full converter paths, each full converter path comprising an input node configured for connection to a respective phase input, an output node, a first winding, and a second winding, wherein the first winding is coupled in series between the input node and the second winding, and the second winding is coupled in series between the first winding and the output node; and
   a second half converter path comprising an input node configured for connection to a respective phase input, an output node coupled to the elementary cell output node, and a first winding coupled in series between the input node and the output node,
   wherein the first half converter path, the second half converter path, and the one or more full converter paths are each configured to conduct current in a same direction between the respective input node and the respective output node,
   wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.
3. The elementary cell of embodiment 1 or 2, wherein each elementary cell further comprises a housing for the one or more segments.
4. The elementary cell of any of embodiments 1-3, wherein the elementary cell input node of each segment and the elementary cell output node of each segment is provided on a bottom surface and/or a top surface of the housing.
5. The elementary cell of any of embodiments 1-4, wherein the elementary cell input node of each segment and the elementary cell output node of each segment is provided on a side surface of the housing.
6. The elementary cell of any of embodiments 1-5, further comprising a substrate, and wherein the elementary cell input node, the elementary cell output node, and the input node of each converter path of each of the one or more segments are coupled to the substrate.
7. The elementary cell of any of embodiments 1-6, further comprising a local substrate and a regional substrate, and wherein the elementary cell input node and the elementary cell output node of each of the one or more segments are coupled to the regional substrate, and wherein the input node of each converter path of each of the one or more segments are coupled to the local substrate.
8. The elementary cell of any of embodiments 1-7, wherein the elementary cell comprises one, two or four segments.
9. The elementary cell of any of embodiments 1-8, further comprising a compensation inductor coupled between the elementary cell input node of a selected segment amongst the one or more segments, and the elementary cell output node of a different segment amongst the one or more segments.
10. The elementary cell of any of embodiments 1-9, further comprising a compensation inductor coupled between the elementary cell input node of a selected segment amongst the one or more segments, and the elementary cell output node of the selected segment.
11. The elementary cell of any of embodiments 1-10, further comprising a compensation inductor coupled between the elementary cell input node of a selected segment amongst the one or more segments, and an elementary cell output node of a segment of a further elementary cell.
12. The elementary cell of any of embodiments 1-11, wherein the input node of each of the converter paths are each coupled to respective switching networks.
13. The elementary cell of any of embodiments 1-12, wherein the output node of each of the converter paths are coupled to a common output node for connection to a load.
14. An elementary cell for a circular voltage regulator, the elementary cell comprising at least one segment, the segment comprising:
   an elementary cell input node configured for connection to an elementary cell output node of a segment;
   an elementary cell output node configured for connection to an elementary cell input node of a segment;
   a first half converter path comprising an input node coupled to the elementary cell input node, an output node, and a second winding coupled in series between the input node and the output node;
   one or more full converter paths, each full converter path comprising an input node configured for connection to a respective phase input, an output node, a first winding, and a second winding, wherein the first winding is coupled in series between the input node and the second winding, and the second winding is coupled in series between the first winding and the output node; and
   a second half converter path comprising an input node configured for connection to a respective phase input, an output node coupled to the elementary cell output node, and a first winding coupled in series between the input node and the output node,
   wherein the first half converter path, the second half converter path, and the one or more full converter paths are each configured to conduct current in a same direction between the respective input node and the respective output node,
   wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.
15. The elementary cell of embodiment 14, further comprising one or more further segments, each further segment comprising:
   an elementary cell input node configured for connection to an elementary cell output node of a different segment;
   an elementary cell output node configured for connection to an elementary cell input node of a different segment;
   a first half converter path comprising an input node coupled to the elementary cell input node, an output node, and a second winding coupled in series between the input node and the output node; and
   a second half converter path comprising an input node configured for connection to a respective phase input, an output node coupled to the elementary cell output node, and a first winding coupled in series between the input node and the output node,
   wherein the first half converter path and the second half converter path are each configured to conduct current in a same direction between the respective input node and the respective output node, and wherein the second winding of the first half converter path is inductively coupled to the first winding of the second half converter path of the same segment.
16. The elementary cell of embodiment 14 or 15, wherein each elementary cell further comprises a housing for the one or more segments.
17. The elementary cell of any of embodiments 14-16, wherein the elementary cell input node of each segment and the elementary cell output node of each segment is provided on a bottom surface and/or a top surface of the housing.
18. The elementary cell of any of embodiments 14-17, wherein the elementary cell input node of each segment and the elementary cell output node of each segment is provided on a side surface of the housing.
19. The elementary cell of any of embodiments 14-18, further comprising a substrate, and wherein the elementary cell input node, the elementary cell output node, the input node of each of the converter paths of each of the one or more segments are coupled to the substrate.
20. The elementary cell of any of embodiments 14-19, further comprising a local substrate and a regional substrate, and wherein the elementary cell input node and the elementary cell output node of each of the one or more segments are coupled to the regional substrate, and wherein the input node of each of the converter paths of each of the one or more segments are coupled to the local substrate.
21. The elementary cell of any of embodiments 14-20, wherein the elementary cell comprises one, two or four segments.
22. The elementary cell of any of embodiments 14-21, further comprising a compensation inductor coupled between the elementary cell input node of a selected segment amongst the one or more segments, and the elementary cell output node of a different segment amongst the one or more segments.
23. The elementary cell of any of embodiments 14-22, further comprising a compensation inductor coupled between the elementary cell input node of a selected segment amongst the one or more segments, and the elementary cell output node of the selected segment.
24. The elementary cell of any of embodiments 14-23, further comprising a compensation inductor coupled between the elementary cell input node of a selected segment amongst the one or more segments, and an elementary cell output node of a segment of a further elementary cell.
25. The elementary cell of any of embodiments 14-24, wherein the input node of each of the converter paths are each coupled to respective switching networks.
26. The elementary cell of any of embodiments 14-25, wherein the output node of each of the converter paths are coupled to a common output node for connection to a load.
27. A circular voltage regulator, comprising:
   a first elementary cell according to any of embodiments 1-26; and
   a second elementary cell according to any of embodiments 1-26, wherein
   an elementary cell input node of a segment amongst the one or more segments of the first elementary cell is coupled to an elementary cell output node of a segment amongst the one or more segments of the second elementary cell.
28. The circular voltage regulator of embodiment 27, wherein the first elementary cell comprises a first segment, and the second elementary cell comprises a second segment, and wherein the elementary cell input node of the first segment of the first elementary cell is coupled to the elementary cell output node of the second segment of the second elementary cell, and the elementary cell input node of the second segment of the second elementary cell is coupled to the elementary cell output node of the first segment of the first elementary cell.
29. The circular voltage regulator of embodiment 27 or 28, further comprising one or more further elementary cells, each of the one of more further elementary cells according to any of embodiments 1-14, wherein a elementary cell input node of a segment amongst the one or more segments of each further elementary cell is coupled to a elementary cell output node of a segment amongst the one or more segments of another elementary cell.
30. A method for forming a circular voltage regulator, comprising:
   providing a first elementary cell according to any of embodiments 1-26;
   providing a second elementary cell according to any of embodiments 1-26; and
   connecting an elementary cell input node of a segment amongst the one or more segments of the first elementary cell to an elementary cell output node of a segment amongst the one or more segments of the second elementary cell.

## Claims

1. An elementary cell (300) for a circular voltage regulator, the elementary cell comprising one or more segments (200-2), each segment comprising:
an elementary cell input node (310) configured for connection to an elementary cell output node of a different segment;
an elementary cell output node (320) configured for connection to an elementary cell input node of a different segment;
a first half converter path (201m) comprising an input node (210m) coupled to the elementary cell input node, an output node (220m), and a second winding (240m) coupled in series between the input node and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path and the second half converter path are each configured to conduct current in a same direction between the respective input node and the respective output node, and wherein the second winding of the first half converter path is inductively coupled to the first winding of the second half converter path of the same segment.

2. The elementary cell (300) of claim 1, further comprising one or more further segments (200-2), each further segment comprising:
an elementary cell input node (310) configured for connection to an elementary cell output node of a segment;
an elementary cell output node (320) configured for connection to an elementary cell input node of a segment;
a first half converter path (201m) comprising an input node (210m) coupled to the elementary cell input node, an output node (220m), and a second winding (240m) coupled in series between the input node and the output node;
one or more full converter paths (201a-c), each full converter path comprising an input node (210a-c) configured for connection to a respective phase input, an output node (220a-c), a first winding (230a-c), and a second winding (240a-c), wherein the first winding is coupled in series between the input node and the second winding, and the second winding is coupled in series between the first winding and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path, the second half converter path, and the one or more full converter paths are each configured to conduct current in a same direction between the respective input node and the respective output node,
wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

3. The elementary cell of claim 1 or 2, wherein each elementary cell (300) further comprises a housing (330) for the one or more segments (200).

4. The elementary cell of claim 3, wherein the elementary cell input node (310) of each segment (200) and the elementary cell output node (320) of each segment is provided: on a bottom surface and/or a top surface of the housing (330); or on a side surface of the housing (330.

5. The elementary cell of any of claims 1-4, further comprising a substrate (510), and wherein the elementary cell input node (310), the elementary cell output node (320), the input node (210a-c, 210n) of each of the converter paths of each of the one or more segments are coupled to the substrate.

6. The elementary cell of any of claims 1-4, further comprising a local substrate (512a-b) and a regional substrate (514), and wherein the elementary cell input node (310) and the elementary cell output node (320) of each of the one or more segments are coupled to the regional substrate, and wherein the input node (210a-c, 210n) of each of the converter paths of each of the one or more segments are coupled to the local substrate.

7. The elementary cell of any of claims 1-6, wherein the elementary cell comprises one, two or four segments.

8. The elementary cell of any of claims 1-7, further comprising a compensation inductor coupled either:
between the elementary cell input node (310) of a selected segment amongst the one or more segments, and the elementary cell output node (320) of a different segment amongst the one or more segments;
between the elementary cell input node of a selected segment amongst the one or more segments, and the elementary cell output node of the selected segment; or
between the elementary cell input node of a selected segment amongst the one or more segments, and an elementary cell output node of a segment of a further elementary cell.

9. The elementary cell of any of claims 1-8, wherein the input node (210n, 210a-c) of each of the converter paths (201n, 201a-c) are each coupled to respective switching networks.

10. The elementary cell of any of claims 1-9, wherein the output node (220m, 220a-c) of each of the converter paths (201m, 201a-c) are coupled to a common output node for connection to a load.

11. An elementary cell (300) for a circular voltage regulator, the elementary cell comprising at least one segment (200-1), the segment comprising:
an elementary cell input node (310) configured for connection to an elementary cell output node of a segment;
an elementary cell output node (320) configured for connection to an elementary cell input node of a segment;
a first half converter path (201m) comprising an input node (210m) coupled to the elementary cell input node, an output node (220m), and a second winding (240m) coupled in series between the input node and the output node;
one or more full converter paths (201a-c), each full converter path comprising an input node (210a-c) configured for connection to a respective phase input, an output node (220a-c), a first winding (230a-c), and a second winding (240a-c), wherein the first winding is coupled in series between the input node and the second winding, and the second winding is coupled in series between the first winding and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path, the second half converter path, and the one or more full converter paths are each configured to conduct current in a same direction between the respective input node and the respective output node,
wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

12. A circular voltage regulator (400), comprising:
a first elementary cell (300) according to any of claims 1-11; and
a second elementary cell (300) according to any of claims 1-11, wherein
an elementary cell input node (310) of a segment (200) amongst the one or more segments of the first elementary cell is coupled to an elementary cell output node (320) of a segment amongst the one or more segments of the second elementary cell.

13. The circular voltage regulator of claim 12, wherein the first elementary cell comprises a first segment, and the second elementary cell comprises a second segment, and wherein the elementary cell input node (310) of the first segment of the first elementary cell is coupled to the elementary cell output node (320) of the second segment of the second elementary cell, and the elementary cell input node of the second segment of the second elementary cell is coupled to the elementary cell output node of the first segment of the first elementary cell.

14. The circular voltage regulator of claim 12 or 13, further comprising one or more further elementary cells, each of the one of more further elementary cells according to any of claims 1-11, wherein a elementary cell input node of a segment amongst the one or more segments of each further elementary cell is coupled to a elementary cell output node of a segment amongst the one or more segments of another elementary cell.

15. A method (1000) for forming a circular voltage regulator, comprising:
providing (1010) a first elementary cell according to any of claims 1-11;
providing (1020) a second elementary cell according to any of claims 1-11; and
connecting (1030) an elementary cell input node of a segment amongst the one or more segments of the first elementary cell to an elementary cell output node of a segment amongst the one or more segments of the second elementary cell.

## Amended claims

### Amended claims in accordance with Rule 137(2) EPC.

1. An elementary cell (300) for forming a circular voltage regulator, the elementary cell comprising one or more segments (200-2), each segment configured to provide a part of a circular voltage regulator, each segment comprising:
an elementary cell input node (310) configured for connection to an elementary cell output node of a different segment;
an elementary cell output node (320) configured for connection to an elementary cell input node of a different segment;
a first half converter path (201m) comprising an input node (210m) coupled to the elementary cell input node, an output node (220m), and a second winding (240m) coupled in series between the input node and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path and the second half converter path are each configured to conduct current in a same direction between the respective input node and the respective output node, and wherein the second winding of the first half converter path is inductively coupled to the first winding of the second half converter path of the same segment.

2. The elementary cell (300) of claim 1, further comprising one or more further segments (200-2), each further segment comprising:
an elementary cell input node (310) configured for connection to an elementary cell output node of a segment;
an elementary cell output node (320) configured for connection to an elementary cell input node of a segment;
a first half converter path (201m) comprising an input node (210m) coupled to the elementary cell input node, an output node (220m), and a second winding (240m) coupled in series between the input node and the output node;
one or more full converter paths (201a-c), each full converter path comprising an input node (210a-c) configured for connection to a respective phase input, an output node (220a-c), a first winding (230a-c), and a second winding (240a-c), wherein the first winding is coupled in series between the input node and the second winding, and the second winding is coupled in series between the first winding and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path, the second half converter path, and the one or more full converter paths are each configured to conduct current in a same direction between the respective input node and the respective output node,
wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

3. The elementary cell of claim 1 or 2, wherein each elementary cell (300) further comprises a housing (330) for the one or more segments (200).

4. The elementary cell of claim 3, wherein the elementary cell input node (310) of each segment (200) and the elementary cell output node (320) of each segment is provided: on a bottom surface and/or a top surface of the housing (330); or on a side surface of the housing (330.

5. The elementary cell of any of claims 1-4, further comprising a substrate (510), and wherein the elementary cell input node (310), the elementary cell output node (320), the input node (210a-c, 210n) of each of the converter paths of each of the one or more segments are coupled to the substrate.

6. The elementary cell of any of claims 1-4, further comprising a local substrate (512a-b) and a regional substrate (514), and wherein the elementary cell input node (310) and the elementary cell output node (320) of each of the one or more segments are coupled to the regional substrate, and wherein the input node (210a-c, 210n) of each of the converter paths of each of the one or more segments are coupled to the local substrate.

7. The elementary cell of any of claims 1-6, wherein the elementary cell comprises one, two or four segments.

8. The elementary cell of any of claims 1-7, further comprising a compensation inductor coupled either:
between the elementary cell input node (310) of a selected segment amongst the one or more segments, and the elementary cell output node (320) of a different segment amongst the one or more segments;
between the elementary cell input node of a selected segment amongst the one or more segments, and the elementary cell output node of the selected segment; or
between the elementary cell input node of a selected segment amongst the one or more segments, and an elementary cell output node of a segment of a further elementary cell.

9. The elementary cell of any of claims 1-8, wherein the input node (210n, 210a-c) of each of the converter paths (201n, 201a-c) are each coupled to respective switching networks.

10. The elementary cell of any of claims 1-9, wherein the output node (220m, 220a-c) of each of the converter paths (201m, 201a-c) are coupled to a common output node for connection to a load.

11. An elementary cell (300) for forming a circular voltage regulator, the elementary cell comprising at least one segment (200-1), each segment configured to provide a part of the circular voltage regulator, the segment comprising:
an elementary cell input node (310) configured for connection to an elementary cell output node of a segment;
an elementary cell output node (320) configured for connection to an elementary cell input node of a segment;
a first half converter path (201m) comprising an input node (210m) coupled to the elementary cell input node, an output node (220m), and a second winding (240m) coupled in series between the input node and the output node;
one or more full converter paths (201a-c), each full converter path comprising an input node (210a-c) configured for connection to a respective phase input, an output node (220a-c), a first winding (230a-c), and a second winding (240a-c), wherein the first winding is coupled in series between the input node and the second winding, and the second winding is coupled in series between the first winding and the output node; and
a second half converter path (201n) comprising an input node (210n) configured for connection to a respective phase input, an output node (220n) coupled to the elementary cell output node, and a first winding (230n) coupled in series between the input node and the output node,
wherein the first half converter path, the second half converter path, and the one or more full converter paths are each configured to conduct current in a same direction between the respective input node and the respective output node,
wherein the second winding of the first half converter path is inductively coupled to a winding of one of the full converter paths, the first winding of the second half converter path is inductively coupled to a winding of one of the full converter paths, and each remaining winding of the full converter paths is inductively coupled to a remaining winding of a different converter path.

12. A circular voltage regulator (400), comprising:
a first elementary cell (300) according to any of claims 1-11; and
a second elementary cell (300) according to any of claims 1-11, wherein
an elementary cell input node (310) of a segment (200) amongst the one or more segments of the first elementary cell is coupled to an elementary cell output node (320) of a segment amongst the one or more segments of the second elementary cell.

13. The circular voltage regulator of claim 12, wherein the first elementary cell comprises a first segment, and the second elementary cell comprises a second segment, and wherein the elementary cell input node (310) of the first segment of the first elementary cell is coupled to the elementary cell output node (320) of the second segment of the second elementary cell, and the elementary cell input node of the second segment of the second elementary cell is coupled to the elementary cell output node of the first segment of the first elementary cell.

14. The circular voltage regulator of claim 12 or 13, further comprising one or more further elementary cells, each of the one of more further elementary cells according to any of claims 1-14, wherein a elementary cell input node of a segment amongst the one or more segments of each further elementary cell is coupled to a elementary cell output node of a segment amongst the one or more segments of another elementary cell.

15. A method (1000) for forming a circular voltage regulator, comprising:
providing (1010) a first elementary cell according to any of claims 1-11;
providing (1020) a second elementary cell according to any of claims 1-11; and
connecting (1030) an elementary cell input node of a segment amongst the one or more segments of the first elementary cell to an elementary cell output node of a segment amongst the one or more segments of the second elementary cell.
